# DEMANDE DE BREVET EUROPEEN

(11) **EP 3 985 514 A1**
(43) Date de publication de la demande: **20.04.2022**
(21) Numéro de dépôt: 20306239.3
(22) Date de dépôt: 19.10.2020
(51) Int. Cl.: G06F 11/30, G06F 11/34, G06N 20/00

(54) **PROCÉDÉ DE PRÉDICTION ET D'ANALYSE NON INTRUSIF D'AU MOINS UN INCIDENT DANS UN CENTRE DE DONNÉES**

(71) Demandeur: Bull SAS, 78340 Les Clayes-sous-Bois (FR)
(72) Inventeur: SGHIOUER, Kaoutar, 60200 Compiègne (FR); BOURRASSET, Cédric, 34700 Lodève (FR)
(74) Mandataire: Cabinet Camus Lebkiri

(57) **Abrégé**

Un aspect de l'invention concerne un procédé de prédiction et d'analyse non intrusif d'au moins un incident dans un centre de données, caractérisé en ce qu'il comporte les étapes suivantes : cartographie du centre de données, construction d'un jumeau numérique du centre de données à partir de la cartographie, acquisition de données d'exploitation produites par le centre de données, mise à jour du jumeau numérique construit à partir de données d'exploitation acquises, connexion du jumeau numérique à un outil de prédiction et d'analyse d'incidents, et interrogation de l'outil de prédiction et d'analyse d'incidents connecté au jumeau numérique pour prédire et analyser au moins un incident du centre de données.

## Description

### DOMAINE TECHNIQUE DE L'INVENTION

Le domaine technique de l'invention est celui de l'analyse et de la prédiction d'incidents dans les centres de données, autrement dit celui de la maintenance prédictive ou préventive dans les centres de données.

L'invention a pour objet un procédé de prédiction et d'analyse non intrusif d'au moins un incident dans un centre de données. L'invention a également pour objet un produit-programme d'ordinateur permettant la mise en œuvre du procédé.

### ARRIERE-PLAN TECHNOLOGIQUE DE L'INVENTION

Un centre de données, autrement appelé data center, est un ensemble de dispositifs de traitement de données rassemblés dans un même lieu. Ces dispositifs de traitements sont interconnectés et coopèrent dans la réalisation de tâches. Ces dispositifs peuvent être répartis en sous-ensembles isolés logiquement ou physiquement, par exemple pour des raisons de confidentialité.

Un centre de données est utilisé par un ou plusieurs tiers, pour enregistrer des données et pour héberger des applications. De telles applications sont destinées à une pluralité d'utilisateurs, que l'on compte parfois en millions voire plus, et ont donc des architectures complexes incluant la redondance et la gestion de charge.

Les centres de données sont composés d'un nombre de plus en plus important de composants interconnectés. Ces composants sont des composants matériels, de traitement ou d'interconnexion, et des composants logiciels. Dans ces centres de données, la multiplicité de ces composants implique un risque élevé de défaillance du système.

Pour éviter une défaillance complète ou partielle d'un système, il est connu d'avoir recours à des algorithmes de prédiction d'incidents permettant d'anticiper les incidents pouvant entraîner une telle défaillance. Ces algorithmes, souvent basés sur de l'Intelligence Artificielle ou IA, ont besoin de deux éléments pour être mis en œuvre sur un centre de données : un historique de données d'exploitation du centre de données et une cartographie du centre de données.

L'historique de données nécessaire est un historique couvrant des infrastructures techniques et applicatives comportant par exemple des données de CPU, de réseaux, de mémoires ou des logs d'applications du centre de données. Pour que l'algorithme soit capable d'évaluer la normalité de chaque donnée et de faire des corrélations pertinentes pour pouvoir faire une prédiction d'incidents et l'analyse des causes de chaque incident prédit, autrement appelé analyse cause racine, au moins quatre à six mois de données sont nécessaires avec une granularité fine de la donnée, de cinq minutes au maximum, préférentiellement de l'ordre de la seconde. Cependant, un tel historique n'est pas disponible dans les centres de données actuels car les différentes infrastructures les composant purgent régulièrement leurs bases de données faute de disponibilité d'espace de stockage et du coût associé à leur conservation.

De plus, la cartographie des centres de données est généralement inconnue, à cause de leur complexité qui empêche d'obtenir une vision globale de l'architecture ou pour des raisons de confidentialité.

Dans l'état actuel des choses, il est donc impossible de mettre en œuvre un algorithme de prédiction d'incidents basé sur de l'IA sur un centre de données.

### RESUME DE L'INVENTION

L'invention offre une solution aux problèmes évoqués précédemment.

Un aspect de l'invention concerne un procédé de prédiction et d'analyse non intrusif d'au moins un incident dans un centre de données, comportant les étapes suivantes :
- Cartographie du centre de données ;
- Construction d'un jumeau numérique du centre de données à partir de la cartographie ;
- Acquisition de données d'exploitation produites par le centre de données ;
- Mise à jour du jumeau numérique construit à partir de données d'exploitation acquises ;
- Connexion du jumeau numérique à un outil de prédiction et d'analyse d'incidents ;
- Interrogation de l'outil de prédiction et d'analyse d'incidents connecté au jumeau numérique pour prédire et/ou analyser au moins un incident du centre de données.

Dans certains secteurs industriels, les jumeaux numériques sont utilisés pour optimiser le fonctionnement et la maintenance des actifs physiques, des systèmes et des processus de fabrication. En effet, un jumeau numérique est une réplique numérique d'un objet, d'un processus ou d'un système qui peut être utilisé à diverses fins et qui fournit à la fois les éléments et la dynamique de fonctionnement du système répliqué. Il intègre de l'intelligence artificielle, apprend en permanence et se met à jour régulièrement en utilisant de multiples sources pour représenter son statut, sa condition de travail ou sa position.

Dans l'invention, le concept de jumeau numérique est utilisé sur un centre de données comportant une pluralité de nœuds de calcul. Le jumeau numérique est alors une base de données comportant une énumération de la pluralité de nœuds et, associé à chaque nœud, des données d'exploitation datées. Il est alors possible d'obtenir l'état du centre de données, c'est-à-dire l'ensemble des données d'exploitation correspondantes, à chaque instant passé. Cette base de données est appelée ici base de données de jumelage.

Le couplage du jumeau numérique avec un outil de prédiction et d'analyse d'incidents basé sur de l'IA permet alors de prédire et d'analyser les incidents du centre de données, le recours au jumeau numérique permettant de pallier les problèmes d'indisponibilité des données d'exploitation effacées régulièrement des bases de données du centre de données.

Cette solution permet de fiabiliser des corrélations mathématiques établies entre les différents composants du centre de données, qu'ils s'agissent d'infrastructures ou d'applications, mais également de représenter le centre de données d'une manière agile et évolutive permettant d'accélérer le passage en production de la solution et d'améliorer la précision des algorithmes. Dans le cas où une solution de suivi des changements des données, ou solution CDC (pour « Change Data Capture ») classique, permettant d'identifier les changements de données dans un système pour s'y adapter, a déjà été déployée, une intégration sur un centre de données préexistant est possible afin de faire bénéficier les clients de cette nouvelle approche et ainsi d'améliorer le processus existant. Il devient alors possible de proposer une analyse de cause racine, la cause racine pouvant être très ancienne relativement à l'incident, par exemple antérieure de plusieurs mois.

De plus, l'invention permet de réaliser des analyses même en cas d'indisponibilité partielle ou totale de l'infrastructure.

Outre les caractéristiques qui viennent d'être évoquées dans le paragraphe précédent, le procédé selon un aspect de l'invention peut présenter une ou plusieurs caractéristiques complémentaires parmi les suivantes, considérées individuellement ou selon toutes les combinaisons techniquement possibles :
- Les données d'exploitation acquises sont filtrées ;
- Les données d'exploitation acquises sont enrichies ;
- La cartographie est obtenue par des corrélations réalisées sur des données d'exploitation préalablement acquises ;
- Les données d'exploitation sont acquises via des sondes logicielles ou physiques ;
- L'outil de prédiction et d'analyse d'incidents est entraîné sur des incidents passés ;
- Le jumeau numérique est mis à jour à partir d'une solution de suivi de changements préexistante.

Un autre aspect de l'invention concerne un produit-programme d'ordinateur comprenant des instructions qui, quand le programme est exécuté sur un ordinateur, conduisent celui-ci à mettre en œuvre les étapes du procédé selon l'invention.

Un autre aspect de l'invention concerne un support d'enregistrement sur lequel est enregistré un programme d'ordinateur pour la prédiction et d'analyse non intrusif d'au moins un incident dans un centre de données selon

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention. D'une figure à l'autre, des références identiques désignent des éléments identiques.
- [Fig. 1] La figure 1 est une vue schématique d'un centre de données.
- [Fig. 2] La figure 2 est une vue schématique d'un dispositif permettant la mise en œuvre d'un procédé selon l'invention.
- [Fig. 3] La figure 3 est un schéma synoptique illustrant l'enchaînement des étapes du procédé selon l'invention.

### DESCRIPTION DETAILLEE

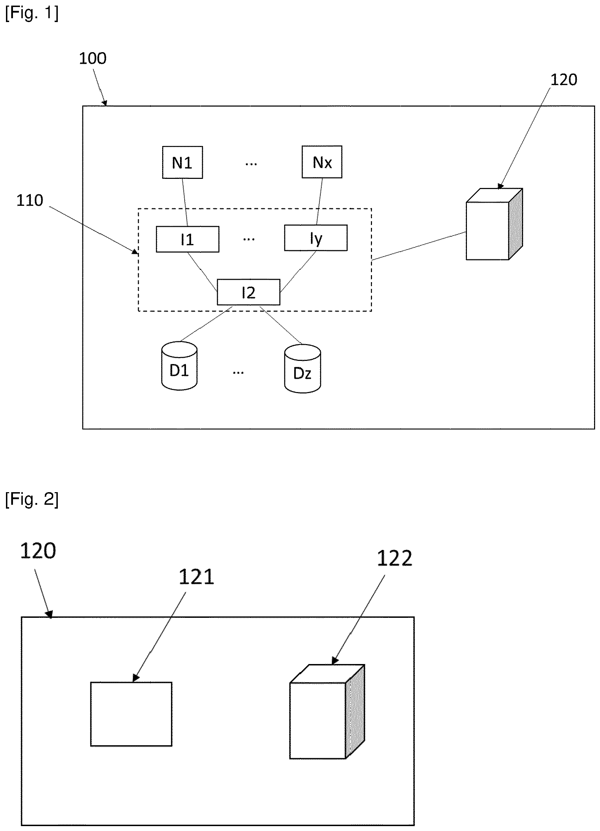

[Fig. 1] La figure 1 montre une représentation schématique d'un centre 100 de données. Le centre 100 de données comporte au moins :
- Une pluralité de nœuds de calcul N1 à Nx, un nœud de calcul étant, par exemple une lame de calcul, un serveur en rack, ou plus généralement tout dispositif de traitement programmable c'est-à-dire auquel on peut faire faire un traitement numérique ;
- Un réseau 110 d'interconnexion comportant une pluralité de nœuds d'interconnexion I1 à Iy, par exemple des commutateurs et/ou des routeurs ;
- Une pluralité de nœuds de stockage D1 à Dz, de tel nœuds étant également appelés baie de stockage, qu'il s'agisse de serveurs NAS (pour « Network Attached Storage ») ou SAN (pour « Storage Area Network »).

Dans un tel centre 100 de données, il est possible d'installer un dispositif 120 de jumelage. Le dispositif 120 de jumelage est un dispositif de traitement de données indépendant de l'exploitation courante du centre 100 de données. Le dispositif 120 de jumelage est un dispositif de traitement de données comportant :
- Des moyens de calcul, par exemple un microprocesseur ;
- Des moyens de stockage, par exemple un ou plusieurs disques durs, ou disques SSD. Ces moyens servent de support d'enregistrement pour enregistrer, entre autres, des programmes d'ordinateur et en particulier celui décrit dans ce document.
- Une interface de communication compatible avec le réseau d'interconnexion 110 du centre 100 de données. Une telle interface est, par exemple, une interface Ethernet, du type fibre channel, ou toute autre interface adaptée aux centres 100 de données.

Ainsi, dans cette description, lorsque l'on attribue une action à un dispositif, cette action est réalisée par des moyens de calcul dudit dispositif mettant en œuvre des codes instructions, aussi appelés codes exécutables, enregistrés dans une mémoire de stockage dudit dispositif. De même, lorsqu'un dispositif communique, cela signifie qu'il émet et/ou reçoit des messages via une interface de communication. Ces messages sont produits et/ou traités par des moyens de calcul dudit dispositif.

On peut également attribuer une action à une application, ou à un logiciel. Application ou logiciel signifie toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

Dans l'exemple décrit, on envisage une machine physique connectée dans le centre 100 de données. Dans des variantes, la machine physique peut être à l'extérieur du centre 100 de données et connectée à une interface de communication du centre 100 de données. Selon une autre variante, il s'agit d'une machine virtuelle qui peut être construite en utilisant des nœuds du centre 100 de données.

Le dispositif 120 de jumelage sert à la mise en œuvre d'un jumeau numérique du centre 100 de données.

[Fig. 2] Dans la pratique, il est possible que le dispositif 120 de jumelage soit mis en œuvre via plusieurs machines, par exemple une machine 121 pour le traitement et une machine 122 pour le stockage de données, comme illustré sur la figure 2. Le traitement est, par exemple :
- L'interfaçage du dispositif 120 de jumelage avec un outil de prédiction et d'analyse d'incidents ;
- Les traitements de données d'exploitation du centre 100 de données pour la mise à jour du jumeau numérique.

La machine 122 pour le stockage de données met en œuvre un système de gestion de base de données.

Il est possible que les fonctionnalités de la machine 121 de traitement et la machine 122 de stockage soient regroupées sur une seule machine. Pour la suite de la description, on confond la machine 122 de stockage de données avec sa fonction.

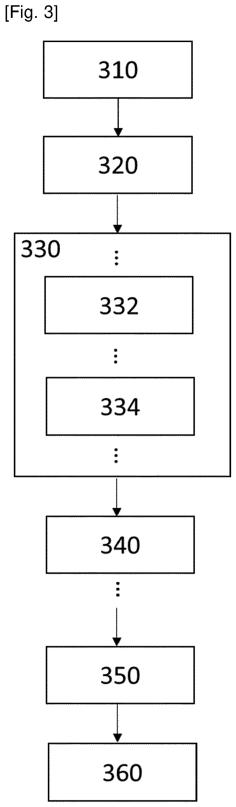

[Fig. 3] La figure 3 illustre l'enchaînement des étapes d'un procédé de prédiction et d'analyse d'incidents du centre 100 de données.

La figure 3 montre une étape 310 de cartographie du centre 100 de données. Cette étape peut être réalisée d'au moins trois façons :
- Il existe une cartographie connue du centre 100 de données ;
- Le centre 100 de données est configuré pour permettre sa cartographie, c'est-à-dire qu'il existe des agents sur chacun des nœuds susceptibles de répondre à des demandes de cartographie. Ces agents utilisent alors, par exemple, le protocole SNMP (Simple Network Management Protocol, pour protocole simple de gestion de réseau) ou un protocole dédié ;
- On utilise des données d'exploitation du centre 100 de données et/ou une cartographie incomplète du centre 100 de données pour construire une cartographie complète du centre 100 de données.

Par exemple, pour établir la cartographie à partir des données d'exploitation, on utilise une Intelligence Artificielle, parfois aussi appelé Informatique Avancé et désignée comme IA. Une telle IA utilise des algorithmes de corrélation. Par exemple, on a une donnée DA provenant d'un serveur A et une donnée DB provenant d'un serveur B : plus la corrélation entre la donnée DA et la donnée DB est forte, plus la probabilité que le serveur A et le serveur B soient liés est élevée.

Des données d'exploitation sont aussi appelées des indicateurs de performance ou des métriques. Ces données d'exploitation sont produites par des sondes de type « Nmon » ou « Perfmon ». Ces données d'exploitation correspondent à des propriétés techniques ou fonctionnelles d'un ou de plusieurs éléments du centre 100 de données ou de son environnement représentant les conditions ou l'état de fonctionnement du centre 100 de données. En outre, un indicateur de performance peut correspondre à une combinaison de propriétés ou à des transformations mathématiques de propriétés. Par exemple, un indicateur de performance peut correspondre à la dérivée d'une propriété d'un élément du centre 100 de données ou bien à un rapport entre les propriétés de deux éléments du centre 100 de données.

Les données d'exploitation incluent aussi les journaux ou logs des applications. Un tel journal comporte une pluralité de lignes, chaque ligne correspondant à une action et/ou à une communication d'une application. Le format le plus répandu de journal est « syslog ».

Le terme « corrélation » au sens de la description correspond à une relation statistique, causale ou non, entre deux variables ou les valeurs de deux variables. Au sens le plus large, toute association statistique est une corrélation mais ce terme désigne par exemple la proximité entre deux variables et l'établissement d'une relation d'ordre. Le terme « causale » ou « causalité » au sens de l'invention correspond à une relation statistique causale entre deux variables ou les valeurs de deux variables. En particulier, une des variables est une cause qui est entièrement ou partiellement responsable de la valeur de l'autre variable au travers d'un effet. La valeur de première variable peut par exemple être considérée comme une cause d'une valeur (actuelle ou future) de la seconde variable. Que cela soit pour la corrélation ou la causalité, une ou plusieurs variables peuvent avoir une relation statistique avec une ou plusieurs autres variables. En outre, une corrélation ou causalité indirect(e) au sens de l'invention correspond à l'existence d'une chaîne de lien de corrélation ou de causalité entre une première variable et une autre variable. Par exemple, une première variable est corrélée à une seconde variable qui est elle-même corrélée à une troisième variable qui est enfin corrélée avec une autre variable.

Une cartographie du centre 100 de données comporte au moins une liste des nœuds du centre 100 de données et des liens physiques et/ou logiques qui existent entre eux.

La figure 3 montre une étape 320 de construction d'un jumeau numérique. Ce jumeau numérique permet de lire un état du centre 100 de données à une date passée. Un tel état comporte tout ou partie des données d'exploitation du centre 100 de données à ladite date passée. On rappelle ici que les données d'exploitation comportent aussi bien les métriques de performance des différents nœuds que les journaux applicatifs.

Un jumeau numérique est donc une base de données comportant une énumération des nœuds et, associé à chaque nœud, des données d'exploitation datées. C'est cette datation qui permet une lecture à une date spécifique. Cette base de données est donc structurée pour permettre d'associer à un identifiant de nœud, ou à un identifiant d'un composant de nœud, une pluralité de données d'exploitation datées.

Un composant de nœud est, par exemple, un microprocesseur, une carte graphique, un composant mémoire volatile, une interface réseau, un bloc de refroidissement, un disque de stockage de données, un contrôleur de bus de communication, la liste n'étant pas exhaustive.

Les deux étapes précédentes sont des étapes préliminaires. Une fois le jumeau numérique construit, on peut passer à une étape 330 d'acquisition de données d'exploitation produites par le centre 100 de données.

Dans une variante de l'invention, le centre 100 de données est équipé d'une solution de suivi de changements, aussi appelé solution CDC. Dans ce cas, les données enregistrées par cette solution de suivi sont utilisées pour alimenter le jumeau numérique, c'est-à-dire qu'elles sont enregistrées dans la base de données de jumelage.

S'il existe un historique de données d'exploitation, il peut également être utilisé pour alimenter le jumeau numérique.

Dans l'étape 330 d'acquisition de données, on se connecte à des sondes existant dans le centre 100 de données.

Par « sonde » ou « sonde informatique », on entend au sens de la description un dispositif, logiciel ou processus associé à un équipement qui permet d'effectuer, de gérer et/ou de faire remonter vers un équipement informatique des mesures des valeurs d'indicateurs de performance tels que des paramètres d'un système. Cela peut correspondre au sens large à des valeurs sur l'utilisation de ressources, des valeurs de paramètres d'exécution d'applications ou encore des valeurs de l'état de fonctionnement des ressources. Une sonde selon la description englobe donc également les logiciels ou processus capables de générer des journaux applicatifs ou des historiques des événements (« log file » selon la terminologie anglosaxonne). En outre, les sondes peuvent aussi correspondre à des capteurs physiques tels que des capteurs de température, d'humidité, de fuites d'eau, de consommation électrique, de mouvement, d'air conditionné, et de fumée.

Chaque sonde étant associée à un nœud, ou composant de nœud, on peut donc alimenter la base de données de jumelage dans une étape 340 de mise à jour du jumeau numérique.

Dans une variante de l'invention, l'étape 330 d'acquisition comporte une sous-étape 332 de filtrage. Une telle étape est, par exemple, une étape d'échantillonnage visant à limiter le nombre de données à enregistrer lors d'une mise à jour du jumeau numérique. Par exemple, on ne conserve que les données servant à la prédiction d'incidents. Les données filtrées peuvent également dépendre de l'outil de prédiction et d'analyse d'incidents qui sera déployé pour exploiter le jumeau numérique. Il est en effet possible que cet outil soit plus ou moins sensible à telle ou telle donnée. Il est donc possible d'adapter le filtrage en fonction de l'outil de prédiction et d'analyse d'incidents. Ce filtrage peut se faire par identifiant de nœud et/ou identifiant d'indicateur de performance. Pour deux nœuds distincts, le filtrage des indicateurs de performance peut être différent. Par exemple pour un nœud de stockage de données servant à un moteur de base de données, on peut être plus sensible aux indicateurs de performance liés aux disques que pour un nœud applicatif effectuant des calculs. Ces filtres sont enregistrés dans une base de données de filtres accessible lors de la mise en œuvre du procédé selon l'invention. Dans une variante ces filtres sont enregistrés dans la base de données de jumelage.

Un autre exemple de filtrage est que, lors d'une la phase d'apprentissage automatique une pondération est affectée à chaque nœud. Cette pondération est liée à son importance dans l'arrivée de l'incident. Lors de la phase de mise à jour du jumeau numérique on ne conserve que les nœuds avec une forte pondération.

Dans une variante de l'invention, l'étape 330 d'acquisition comporte une sous-étape 334 d'enrichissement des données. On parle aussi d'augmentation des données. Par exemple, la collecte de valeurs de métriques (i.e. indicateurs de performance) et leur traitement permet de détecter un ou plusieurs indicateurs de performance en anomalie à partir de valeurs anormales puis d'enrichir ces indicateurs de performance en anomalie avec des données relatives à des indicateurs de performance à risque de devenir en anomalie.

Une autre façon d'enrichir les données est la suivante : supposons que les données existantes soient obtenues périodiquement, avec une période de 5 minutes et que l'on souhaite avoir une traçabilité plus fine, par exemple de l'ordre de la seconde. On augmente les données en construisant, par interpolation de Lagrange, les valeurs des données à la granularité de la seconde. D'autres type d'interpolation sont envisageables comme l'interpolation linéaire.

Une autre forme d'enrichissement est la standardisation des données. Il est fréquent que les données soient hétérogènes dans leur format. Les données sont donc normalisées avant la mise à jour du jumeau numérique. Une façon de normaliser les données consiste par exemple à utiliser les mêmes unités.

Les étapes 330 d'acquisition des données d'exploitation et 340 de mise à jour du jumeau numérique sont réalisées régulièrement. La période de mise à jour dépend en partie de la variabilité et de la sensibilité du centre de données. Par variabilité on entend la mise à jour de sa configuration matérielle et logicielle. Par sensibilité on entend la criticité pour l'exploitant du centre de données. Des grandeurs typiques sont de quelques secondes à quelques minutes. Pour un centre de données stable cette période peut être mesurée en heure.

La figure 3 montre une étape 350 de connexion ou d'interfaçage du jumeau numérique à un outil de prédiction et d'analyse d'incidents. Cette connexion peut être réalisée ad-hoc pour analyser un incident, ou être permanente pour prédire des incidents à venir et appliquer des mesures correctives pour éviter qu'un incident se produise ou pour en limiter les conséquences.

L'outil de prédiction et d'analyse d'incidents est connu. Le fait de le connecter au jumeau numérique permet à l'outils de prédiction et d'analyse d'incidents d'accéder à toutes les données d'exploitation comme s'il était connecté au centre de données lui-même.

L'outil de prédiction et d'analyse d'incidents peut aussi être basé sur de l'Intelligence Artificielle. Il est par exemple entraîné sur des incidents qu'au moins un centre 100 de données a rencontré dans le passé pour être capable de prédire de futurs incidents et de déterminer la ou les causes de ces incidents. L'entraînement peut être supervisé ou/puis non supervisé. Une fois entrainé, les mises à jour du jumeau numérique lui permettent d'appliquer son modèle pour actualiser ses prédictions.

Un tel outil permet de prendre en compte des signaux faibles qui échappe le plus souvent à la vigilance humaine. Il est par exemple basé sur une base de corrélations qui enregistre des corrélations entre indicateurs de performances. Pour fonctionner un tel outil a donc besoin de pouvoir collecter les valeurs pour ces indicateurs pour pouvoir effectuer ses calculs. Le jumeau numérique permet à cet outil d'accéder à ces valeurs. Dans la mesure ou le jumeau numérique est mis à jour régulièrement les résultats de l'outil de prédiction et d'analyse d'incidents sont également à jour, et ce sans intrusion dans le centre 100 de données. Dans la mesure ou le jumeau numérique reflète également les changements d'infrastructure, les prédictions de l'outil de prédiction et d'analyse d'incidents sont toujours cohérentes.

Un tel outil est, par exemple, l'outil « Cognitive Data Center » d'Atos.

L'invention reste pertinente pour tout outil de prédiction et d'analyse d'incidents qui peut se connecter à un centre de données pour collecter des données d'exploitation à analyser, c'est-à-dire que l'invention rester pertinente pour tout outil de prédiction et d'analyse d'incidents capable de collecter des données de type « Nmon » et/ou « Perfmon ».

Du point de vue de l'outil de prédiction et d'analyse d'incidents, le jumeau numérique est un centre 100 de données. Le jumeau numérique apporte cependant deux caractéristiques supplémentaires :
- La capacité de pouvoir se situer à une date du passé ;
- Des données temporellement exhaustives permettant un apprentissage pertinent des outils d'analyse.

La figure 3 montre une étape 360 d'interrogation de l'outil de prédiction et d'analyse d'incidents. Dans cette étape, un utilisateur utilise l'outil de prédiction et d'analyse d'incidents pour obtenir un rapport sur un incident dont il a la date, ou une prédiction d'incident.

L'invention permet donc une analyse non intrusive car elle permet d'utiliser des outils d'analyse existants que l'on connecte à un jumeau numérique du centre 100 de données. Il n'y a donc pas d'intrusion dans le centre 100 de données autre que celle existant déjà pour sa surveillance. Autrement dit, le fonctionnement du centre 100 de données n'est pas perturbé par la solution de prédiction et d'analyse d'incidents selon l'invention.

L'invention permet aussi l'entraînement de la solution sur des données propres au centre 100 de données. Comme les données restent disponibles, il est de plus possible d'approfondir l'entraînement avec des données récentes couvrant des incidents qui n'auraient pas été prédits ou partiellement prédits.

## Revendications

1. Procédé de prédiction et d'analyse non intrusif d'au moins un incident dans un centre de données, **caractérisé en ce qu'**il comporte les étapes suivantes :
- Cartographie (310) du centre de données ;
- Construction (320) d'un jumeau numérique du centre de données à partir de la cartographie ;
- Acquisition (330) de données d'exploitation produites par le centre de données ;
- Mise à jour (340) du jumeau numérique construit à partir de données d'exploitation acquises ;
- Connexion (350) du jumeau numérique à un outil de prédiction et d'analyse d'incidents ;
- Interrogation (360) de l'outil de prédiction et d'analyse d'incidents connecté au jumeau numérique pour prédire et/ou analyser au moins un incident du centre de données.

2. Procédé selon la revendication 1, **caractérisé en ce que** les données d'exploitation acquises sont filtrées (332).

3. Procédé selon l'une quelconque des revendications précédentes, **caractérisé en ce que** les données d'exploitation acquises sont enrichies (334).

4. Procédé selon l'une quelconque des revendications précédentes, **caractérisé en ce que** la cartographie est obtenue par des corrélations réalisées sur des données d'exploitation préalablement acquises.

5. Procédé selon l'une quelconque des revendications précédentes, **caractérisé en ce que** les données d'exploitation sont acquises via des sondes logicielles ou physiques.

6. Procédé selon l'une quelconque des revendications précédentes, **caractérisé en ce que** l'outil de prédiction et d'analyse d'incidents est entraîné sur des incidents passés.

7. Procédé selon l'une quelconque des revendications précédentes, **caractérisé en ce que** le jumeau numérique est mis à jour à partir d'une solution de suivi de changements préexistante.

8. Produit-programme d'ordinateur comprenant des instructions qui, quand le programme est exécuté sur un ordinateur, conduisent celui-ci à mettre en œuvre les étapes du procédé selon l'une quelconque des revendications 1 à 7.

9. Support d'enregistrement sur lequel est enregistré un programme d'ordinateur pour la prédiction et d'analyse non intrusif d'au moins un incident dans un centre de données selon la revendication 8.
